# EUROPEAN PATENT APPLICATION

(11) **EP 4 596 945 A1**
(43) Date of publication of application: **06.08.2025**
(21) Application number: 24219726.7
(22) Date of filing: 13.12.2024
(51) Int. Cl.: F16M 11/04, F16M 11/10, F16M 13/04, G03B 17/56

(54) **ROTARY CONNECTION STRUCTURE AND PHOTOGRAPHY KIT**

(30) Priority: 05.02.2024 CN 202410165863
(71) Applicant: Shenzhen Leqi Innovation Co., Ltd., Shenzhen, Guangdong 518000 (CN)
(72) Inventor: JIANG, Tao, Shenzhen, Guangdong, 518000 (CN); YAN, Keman, Shenzhen, Guangdong, 518000 (CN); TAN, Juan, Shenzhen, Guangdong, 518000 (CN); QIN, Feng, Shenzhen, Guangdong, 518000 (CN); PAN, Zhiqiang, Shenzhen, Guangdong, 518000 (CN); QI, Nan, Shenzhen, Guangdong, 518000 (CN)
(74) Representative: Cabinet Chaillot

(57) **Abstract**

A rotary connection structure includes a first external connection assembly and a rotation damping structure. The first external connection assembly is for external connection with a first photography device (6). The rotation damping structure includes a mounting member, a fastening member, and a connecting member. One end of the fastening member extends through the connecting member to fix and connect to the mounting member. The connecting member is rotatable, in a damped manner, about the fastening member. The connecting member is connected to the first external connection assembly. The first external connection assembly can be a clamp assembly. The mounting member is for connection with a second photography device (7). The second photography device can be a handgrip, and the handgrip is fixedly connected to the mounting member. The rotary connection structure proposed in the present invention realizes rotation of the first photography device and the second photography device.

## Description

### FIELD OF THE INVENTION

The present invention relates to the technical field of photography equipment, and more particularly to a rotary connection structure and a photography kit.

### DESCRIPTION OF THE RELATED ART

With the advent of the increasing improvement of the living standard, photography is becoming one of the important aspects of people's living, demanding for increasingly better photographing experiences. To pursue increasing skillfulness for static or dynamic photographing, photographers often put higher and higher requirements for photographic assistant accessories. For hand-holding photographing, stabilizer photographing, shoulder-carrying photographing, and tripod photographing, to proceed with or ease video photographing, it is a common practice to set up photographic assistant accessories, such as magic adaptor, quick release plate, handgrip, tripod, and top handle, for performance of hand-operating rotary photographing. The handgrip and the top handle can be used for adjusting different angles of photographing scene. However, the known handgrip or top handle, after being set up and fastened, does not allow for minute-adjustment rotation or wide-range rotation to suit the needs for photographing, or they may adopt a rotary damping structure that is complicated. As such, it is of an urgent need to provide a photographic assistant device that allows for minute adjustment or rotation, in order to enable angle adjustment and be easily operated by a user for realizing better video photographing and bringing better experience to users.

### SUMMARY OF THE INVENTION

The present invention is directed to a rotary connection structure, which aims to resolve the technical issue that connection between two existing pieces of photography equipment is not rotatable or a rotary structure used is complicated.

In one aspect, a rotary connection structure is provided which may generally include a first external connection assembly and a rotation damping structure. The first external connection assembly is adapted to externally connect with a first photography device. The rotation damping structure may include a mounting member, a fastening member, and a connecting member. One end of the fastening member extends through the connecting member to fixedly connect to the mounting member, the connecting member being rotatable, in a damped manner, about the fastening member, the connecting member being connected to the first external connection assembly.

In some embodiments, the rotation damping structure further comprises a sleeve, the sleeve comprising a positioning portion and an extension portion connected to each other, a diameter size of the positioning portion being greater than a diameter size of the extension portion, the fastening member extending through the extension portion, the connecting member being formed with a receiving trough that rotatably receives the positioning portion therein, the receiving trough comprising a circular hole, the extension portion extending through the circular hole and fixedly connected to the mounting member.

In some embodiments, the fastening member comprises a screw rod and a screw top portion arranged at one end of the screw rod, the screw top portion being received in the positioning portion, the screw rod extending through the extension portion to threadedly connect with the mounting member.

In some embodiments, the rotation damping structure further comprises two damping gaskets both of which are mounted on the extension portion, one of the damping gaskets being located on the positioning portion and a trough bottom of the receiving trough, another one of the damping gaskets being located between the connecting member and the mounting member.

In some embodiments, a free end of the extension portion is inserted into a retention notch that is formed by recessing the mounting member, the extension portion engaging a notch sidewall of the retention notch so that the extension portion and the mounting member are not rotatable.

In some embodiments, the rotary connection structure further comprises a handgrip, the handgrip being fixedly connected to the mounting member. Alternatively, the mounting member is connected with a second external connection assembly, the second external connection assembly being externally connectable with a second photography device.

In some embodiments, the first external connection assembly clamps and fixes the first photography device, the first photography device comprising a first side frame, the first external connection assembly comprising two clamp bodies, a mounting base, and a first fastening assembly, the mounting base being fixedly connected to the connecting member, the two clamp bodies being rotatably arranged at two opposite sides of the mounting base, head portions of the two clamp bodies both extending beyond a front end of the mounting base to clamp and fix edges of the two sides of the first side frame, a second spring being arranged between the two clamp bodies, the second spring driving the two clamp bodies to clamp and fix the first side frame. The first fastening assembly is mounted on the mounting base in an extendible/retractable manner, a constraining portion of the first fastening assembly being extendible out of the front end of the mounting base, the constraining portion being insertable into a positioning aperture correspondingly formed in the first side frame.

In some embodiments, the first fastening assembly comprises at least one push member, one end of the push member being provided with the constraining portion, the constraining portion comprising a cylindrical peg, the cylindrical peg having a cross-sectional area that is smaller than a cross-sectional area of a connecting portion between the push member and the cylindrical peg, a width dimension of a free end portion of the cylindrical peg being arranged to gradually contract.

In some embodiments, the mounting base further comprises at least one elastic member, the elastic member being mounted in the mounting base, such that one elastic member drives one push member, in order to have the constraining portion extending beyond the front end of the mounting base.

In some embodiments, the first fastening assembly further comprises a positioning pole, the positioning pole being fixedly mounted on the mounting base, the positioning pole extending in an up-down direction of the mounting base, the push member being formed with a sliding hole extending in a front-rear direction of the mounting base, the positioning pole penetrating through the sliding hole.

In some embodiments, two external surfaces of the clamp bodies adjacent to tail ends are protruded to form connecting portions respectively extending in directions away from the clamp bodies, pressing portions being respectively connected to ends of the connecting portions that are away from the clamp bodies, the pressing portions being extended in a direction toward a rear end of the mounting base, so that a pressing space is defined between the pressing portions and the mounting base.

In some embodiments, the head portions of the clamp bodies are protruded from inner side surfaces thereof facing the mounting base to form clamping portions, the clamping portions being arranged for retaining engagement with the first side frame, the clamping portions and the clamp bodies defining therebetween an included angle a, 97°≤α≤105°, left and right sides of the first side frame being each recessed to form an insertion slot, the two clamping portions being respectively insertable into the two insertion slots.

In another aspect, a photography kit is provided which includes a first photography device and a rotary connection structure as described above.

The rotary connection structure provided in the present invention realizes rotation of a first photography device and a second photography device. The second photography device is mounted, by means of the rotary connection structure and a clamp assembly, on the first photography device. When a user rotates the first photography device relative to a connecting member in an attempt to rotate an angle of the first photography device, a mounting member drives a fastening member and a sleeve to rotate relative to the connecting member, and a positioning portion rotates in a receiving trough. The structure is simple, the operation is easy, and it is capable of making better video photographing and bringing better experience to users.

### BRIEF DESCRIPTION OF THE DRAWINGS

FIG. 1 is a schematic view showing a state of use of a photography kit according to a first embodiment of the present invention;
FIG. 2 is a schematic view showing a structure of a first external connection assembly of the photography kit shown in FIG. 1;
FIG. 3 is a cross-sectional view of the photography kit shown in FIG. 1;
FIG. 4 is a cross-sectional view of the first external connection assembly of the photography kit shown in FIG. 1;
FIG. 5 is a schematic view showing a structure illustrating a first photography device and the first external connection assembly shown in FIG. 1 being separated;
FIG. 6 is a schematic view showing a structure of a portion of the first external connection assembly shown in FIG. 1;
FIG. 7 is a schematic view showing a structure of a mounting base of the first external connection assembly shown in FIG. 1;
FIG. 8 is a schematic view showing a partial structure of a photography kit according to a second embodiment of the present invention;
FIG. 9 is a partial cross-sectional view showing a rotary connection structure shown in FIG. 8;
FIG. 10 is an enlarged view showing area A of FIG. 8;
FIG. 11 is an exploded view showing a rotation damping structure shown in FIG. 8;
FIG. 12 is a schematic view showing a structure of a sleeve of the rotation damping structure shown in FIG. 8; and
FIG. 13 a schematic view showing a partial structure of a first external connection assembly shown in FIG. 8.

List of Reference Signs:
clamp body 1; clamping portion 11; connecting portion 12; pressing portion 13; friction portion 131; connection axle 14; second spring 15;
mounting base 2; external connection portion 21; mounting hole 22; mounting space 23;
push member 31; cylindrical peg 311; sliding hole 312; elastic member 32;
positioning pole 51;
first photography device 6; first side frame 61; positioning aperture 62; internal thread 621; insertion slot 63;
second photography device 7;
rotation damping structure 8; mounting member 81; retention notch 811; fastening member 82; connecting member 83; receiving trough 831; sleeve 84; positioning portion 841; extension portion 842; damping gasket 85.

Accomplishment of the objective of the present invention, and functional features and advantages, will be further described with reference to embodiments by referring to the attached drawings.

### DETAILED DESCRIPTION OF PREFERRED EMBODIMENTS OF THE INVENTION

In the following, a clear and complete illustration of the technical solutions provided in embodiments of the present invention will be made with reference to the drawings for the embodiments of the present invention; however, the embodiments so illustrated are only some of the embodiments, but not all embodiments, of the present invention. Other embodiments that are contemplated by those having ordinary skill in the field according to the embodiments of the present invention, without paying creative endeavor, are considered belonging to the scope of protection that the present invention pursues.

It is noted that in the embodiments of the present invention, all directive indications (such as up, down, left, right, front, rear, ...) are used only for explaining relative positional relationships and motion conditions among various components in a specific posture (as indicated by the drawings). When such a specific posture changes, the directive indications are changed accordingly.

It is also noted that when an element is referred to as "being fixed on" or "being arranged on" another element, it is directly on said another element or there may also be an intermediate element present. When an element is referred to as "being connected to" another element, it is directly connected to said another element, or there may also be an intermediate element present.

Further, in the present invention, description that relates to "first" and "second" is used only for illustration purposes, and should not be construed as indicating or implying relative importance or implicitly indicating the quantity of the technical features so referred to. Thus, a feature that is defined with "first" and "second" comprises, explicitly or implicitly, at least one such feature. Further, the technical solution of each embodiment can be combined with each other, provided that it can be achieved by those having ordinary skill in the art. In case that such a combination of technical solutions presents contradiction and is unfeasible, such a combination of technical solutions should be deemed as being not existing and not covered by the protection scope that the present invention pursues.

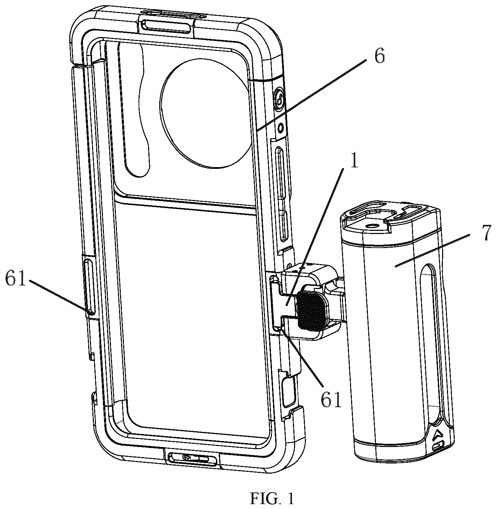

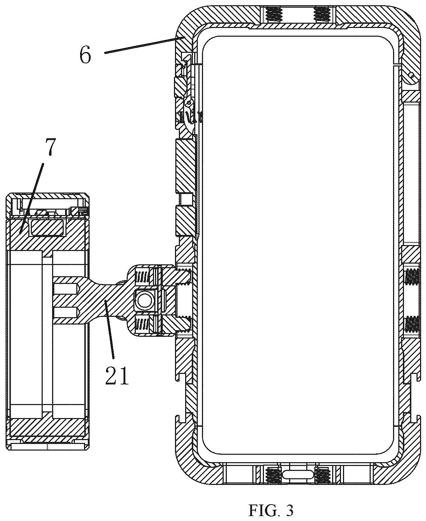

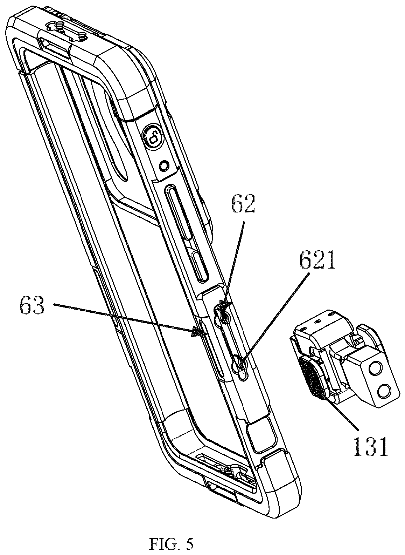

The present invention provides a photography kit, and in a first embodiment, referring to FIGS. 1-7, the photography kit comprises a first photography device 6 and a first external connection assembly that functions to clamp and fix the first photography assembly 6. The first photography device 6 comprises a first side frame 61. The first external connection assembly may comprise a clamp assembly, and the clamp assembly comprises two clamp bodies 1, a mounting base 2, and a first fastening assembly. The two clamp bodies 1 are rotatably mounted to two opposite sides of the mounting base 2, and the two clamp bodies 1 each has a head portion extending beyond a front end of the mounting base 2 for clamping and fixing edges of the two sides of the first side frame 61. Two external surfaces of the clamp bodies 1 adjacent to tail ends are protruded to form connecting portions 12 respectively extending in directions away from the clamp bodies. Pressing portions 13 are respectively connected to ends of the connecting portions 12 that are away from the clamp bodies 1, and the pressing portions 13 are extended in a direction toward a rear end of the mounting base 2, so that a pressing space is defined between the pressing portions 13 and the mounting base 2. The clamp bodies 1 are rotatably connected by a connection axle 14 to the mounting base 2. A second spring 15 is arranged between the two clamp bodies 1, and the second spring 15 drives the two clamp bodies 1 to clamp and fix the first side frame 61. The clamp bodies 1 utilize the leverage principle and the pressing portions 13 elongate the force arm for saving effort. The pressing space expands an opening angle of the clamp bodies 1. The arrangement of the connecting portions 12 helps reduce a size of the mounting base 2.

The first fastening assembly is mounted on the mounting base 2 in an extendible/retractable manner. One or more constraining portions of the first fastening assembly are extendible out of the front end of the mounting base. The constraining portions are so arranged as to be insertable into positioning apertures 62 that are correspondingly formed in the first side frame 61.

In the instant embodiment, the head portions of the two clamp bodies 1 and the front end of the mounting base 2 define a clamping space for clamping of the first side frame 61. The constraining portions of the first fastening assembly is extendible out of the front end of the mounting base 2 for accurate positioning. The two pressing portion 13 and the two sides of the mounting base 2 form the pressing spaces. To assemble, during a course that a user simultaneously presses down the two pressing portions 13 and the two clamp bodies 1 are caused to rotate relative to the mounting base 2 to have a distance between the head portions of the two clamp bodies 1 gradually increased, the second spring 15 compressed further, and the first side frame 61 penetrating into the clamping space, the two constraining portions are respectively inserted into the two positioning apertures 62; and after the two clamp bodies 1 are released, the second spring 15 makes the head portions of the two clamp bodies 1 respectively clamp and fix the edges of the two sides of the first side frame 61, and the first fastening assembly abuts the first photography device 6 to provide a supporting force between the mounting base 2 and the first photography device 6, thereby achieving the two clamp bodies 1 stably clamping the first photography device 6, the operation being effort-saving and users' experience being improved. To remove, the two clamp bodies 1 are pressed down again to rotate relative to the mounting base 2, causing the head portions of the two clamp bodies 1 to release the first side frame 61, and the first photography device 6 is separated from the mounting base 2, and the first fastening assembly restores the original position, the operation being effort-saving and users' experience of photography being improved.

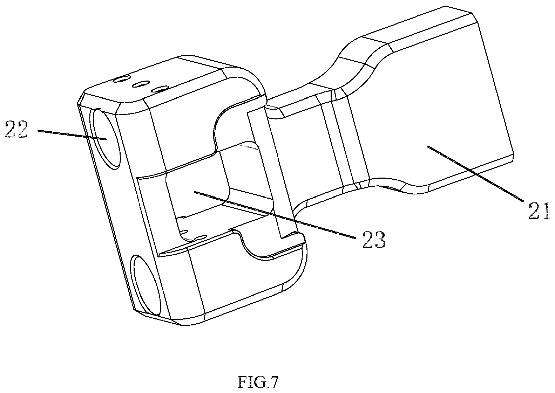

In the above, the first fastening assembly can be arranged between the two clamp bodies 1 to make the entire structure compact, occupying a small space. The pressing portion 13 and the clamp bodies 1 can be arranged parallel. The pressing portion 13 and the clamp bodies 1 can both be in the form of a plate. The head portions of the clamp bodies 1 are used to clamp and fix the first side frame 61 of the first photography device 6. For example, inner sides of the head portions of the clamp bodies 1 may be provided with friction portions to clamp the first photography device 6, and the head portions of the clamp bodies 1 and the first photography device 6 may mate through insertion or connect through fitting. The clamp bodies 1 can be rotatably connected to the mounting base 2 by means of a torsion spring and the connection axle 14, and the clamp bodies 1 may be provided, in a middle portion, with a through hole for rotatable connection with the connection axle 14, such as one clamp body 1 being connected with the mounting base 2 by means of a torsion spring and a connection axle 14 and the two clamp bodies 1 are rotatably connected by means of a torsion spring therebetween. Of course, arranged between the two clamp bodies 1 can be a compression spring, and the compression spring is mounted on a positioning bar. The front end of the mounting base 2 corresponds, in shape, to the first side frame 61 of the first photography device 6, and as an example, an outside surface of the first side frame 61 of the first photography device 6 that corresponds to the front end of the mounting base 2 is a flat surface, and a surface of the front end of the mounting base 2 is a flat surface. As shown in FIG. 7, the mounting base 2 is formed, in various mounting sites, with trough and opening for mounting various components. The mounting base 2 is formed with a mounting space 23 penetrating therethrough leftward and rightward, and the two clamp bodies 1 are respectively set on and cover two opposite sides of the opening of the mounting space 23 for mounting the torsion spring, the compression spring, the positioning bar. The front end of the mounting base 2 is formed with mounting holes 22 penetrating therethrough. The mounting holes 22 are in communication with the mounting space 23. Push members 31 are slidably received in the mounting holes 22, and cylindrical pegs 311 project out of the mounting holes 22.

To save effort for pressing down the pressing portions 13 and to expand the pressing spaces, free ends of the pressing portions 13 are extended beyond a rear end of the mounting base 2, and a thickness dimension of the mounting base 2 between the two clamp bodies 1 is also reduced. To ease the pressing, multiple friction portions 131 are formed in a patterned form, and the friction portions 131 can be arranged as projections or dots, and can of course be other shapes, such tire tread pattern.

The mounting base 2 is further connectable with a second photography device 7 to realize fixed connection between the first photography device 6 and the second photography device 7. Preferably, an external connection portion 21 is formed on and protrudes from the rear end of the mounting base 2. The external connection portion 21 is provided for connection with the second photography device 7. A maximum cross-sectional area of a connection portion between the external connection portion 21 and the mounting base 2 is smaller than a surface area of the rear end of the mounting base 2, and the external connection portion 21 is located between the free ends of the two pressing portion 13 to define the pressing spaces with respect to the pressing portion 13. The mounting base 2 and the external connection portion 21 can be arranged as being integrated together or can be arranged as separate parts.

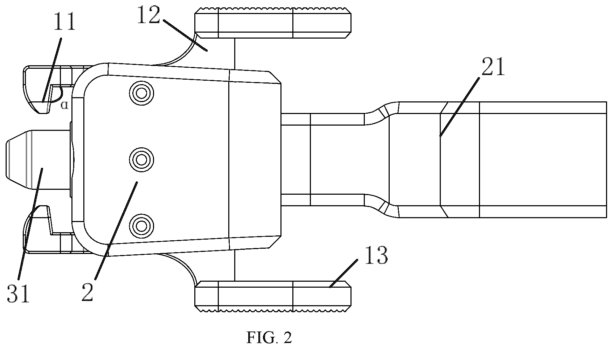

As shown in FIGS. 2, 3 and 5, further, the first fastening assembly 6 comprises at least one push member. One end of the push member 31 is provided with the constraining portion, and the constraining portion comprises the cylindrical peg 311. The cylindrical peg 311 has a cross-sectional area that is smaller than a cross-sectional area of a connecting portion between the push member 31 and the cylindrical peg 311. A width dimension of an end portion of the cylindrical peg 311 is arranged to gradually contract in order to quickly and accurately insert into the positioning aperture 62, for example the free end of the cylindrical peg 311 being a cone. The positioning aperture 62 is formed, in an interior thereof, with an internal thread 621, and in case that the first side frame 61 is not set in connection with the first external connection assembly, the positioning aperture 62 can be used to connect with other photography assemblies or accessories to expand the operation function of the first photography device 6.

In the above, the first photography device 6 and the second photography device 7 can both be accessories that assist photographing with electronic equipment. The first photography device 6 can be a camera, a mobile phone, a stabilizer holding frame (expansion frame), an L plate, and an adaptor board, and the second photography device 7 can be a side handgrip, a top handle, and a microphone rack. For example, the first photography device 6 can be a cage (electronic equipment, such as a mobile phone, a stabilizer, and a camera), and such a cage is also referred to as a rabbit cage, a protection frame, or an expansion frame. The cage can be full enclosing or partial enclosing. For example, the cage comprises four side frames sequentially connected and each side frame may comprise one or more than two first side frames, such as left and right side frames each being provided with a first side frame 61. To make more secured connection, a positioning notch can be formed at an opening of the positioning aperture 62, and the connecting portion between the push member 31 and the constraining portion can be positioned in the positioning notch.

Preferably, the mounting base 2 further comprises at least one elastic member 32. The elastic member 32 is mounted in the mounting base 2. One elastic member 32 drives one push member 31, in order to have the constraining portion extending beyond the front end of the mounting base 2. The elastic member 32 can be a first spring, and the first spring is compressed or stretched to realize movement of the positioning portion of the push member that projects beyond the front end of the mounting base 2 in a front-rear direction of the mounting base 2. One first spring or more than one first spring can drive two push members simultaneously by means of a plate to ensure synchronization. The first spring is mounted in the mounting base 2, and one end of the push member 31 is connected to the first spring, and the constraining portion is extended out of the front end of the mounting base 2.

In the instant embodiment, the push member 31 can be one of a cylindrical form, a peg, a block, and a rolling sphere. During a course that the first side frame 61 of the first photography device 6 is inserted into the clamping space, the constraining portion of the push member 31 extends beyond the front end of the mounting base 2, and the two sides of the first side frame 61 of the first photography device 6 push the cylindrical peg 311 of the push member 31 to move toward the mounting base 2, and after the two clamp bodies 1 are released, the head portions of the two clamp bodies 1 clamp and fix the two sides of the first side frame 61 of the first photography device 6 to have the first spring compressed between the mounting base 2 and the first side frame 61, thereby inducing a supporting force between the mounting base 2 and the first side frame 61 to achieve the two clamp bodies 1 securely clamping the first photography device 6, preventing the two clamp bodies 1 from oscillating relative to the first photography device 6 during the course of use. To remove, the first side frame 61 and the mounting base 2 are separated and the elastic member 32 drives the push member 31 to restore the original location, the structure being simple and fabrication and assembly being easy. There may be provided with one such push member 31, or two or more such push members 31 that are arranged at intervals, which can be arranged according to the specific requirement of use. Of course, an elastic pad can be mounted on the front end of the mounting base 2 or a surface of the first side frame 61, and the elastic pad can be a sponge pad or a silicon rubber pad.

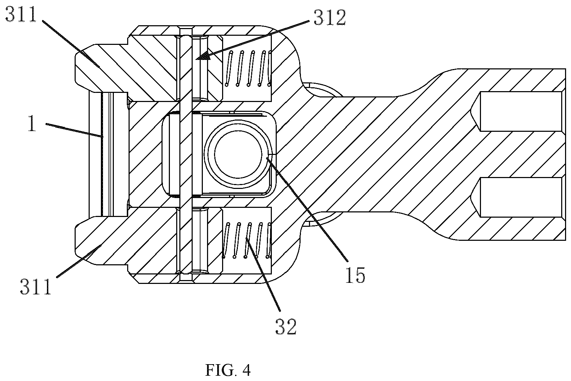

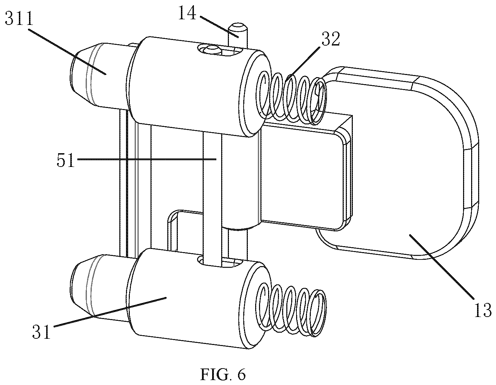

Referring to FIGS. 4 and 6, the photography kit provided in the embodiment of the present invention may further comprise a positioning pole 51. The positioning pole 51 is fixed and mounted on the mounting base 2, and the positioning pole 51 is extended in an up-down direction of the mounting base 2. The push member 31 is formed with a sliding hole 312 extending in the front-rear direction of the mounting base 2. The positioning pole is arranged to extend through the sliding hole 312.

In the instant embodiment, the positioning pole 51 mounts the push member 31 on the mounting base 2. The sliding hole 312 limits the range of frontward/rearward movement of the push member 31. The first spring drives the push member 31 to move in the front-rear direction of the mounting base 2. The sliding hole 312 has a first end and a second end that are opposite to each other, and when assembled, the first spring biases the push member 31 such that the positioning pole is located at the first end of the sliding hole 312. To assemble, during the course that the first side frame 61 of the first photography device 6 is being placed into the clamping space, the constraining portion penetrates into the positioning aperture 62, and the first side frame 61 of the first photography device 6 pushes the push member 31 to move toward the mounting base 2, and the first end of the sliding hole 312 is moved gradually away from the positioning pole 51, while the second end of the sliding hole 312 is gradually approaching the positioning pole 51; to remove, the first photography device 6 and the mounting base 2 are separated, and the first spring drives the push member 31 to restore the original position, making the first end of the sliding hole 312 gradually approaching and eventually abutting the positioning pole 51, while the second end of the sliding hole 312 is driven gradually away from the positioning pole 51. The structure is simple, and the overall weight is reduced, and fabrication and assembly are made easy. Of course, the number of the push members 31 can be two or more than two, and the two or more than two push members 31 are all mounted on the same the positioning pole, so that the overall structure is compact and the space occupied is small, and it is appreciated that they can be mounted on different positioning poles, no limitation being cast here.

Referring to FIGS. 2, 5, and 6, the head portions of the clamp bodies 1 provided in the embodiment of the present invention are protruded from side surfaces thereof facing the mounting base 2 to form clamping portions 11, and the clamping portions 11 are arranged for retaining engagement with the first photography device 6.

Left and right sides of the first side frame 61 are each formed with an insertion slot 63, and the two clamping portions 11 are respectively insertable into the two insertion slots 63. To ease sliding of the first side frame 61 into the clamping space, two sides of the first side frame 61 of the first photography device 6 can be curved surfaces, and an outside surface of the first side frame 61 of the first photography device 6 is a planar surface, and sides of the two clamping portions 11 that face the first side frame 61 are arranged as a divergent opening.

In the instant embodiment, the clamping portions 11 help prevent the first side frame 61 from separating from the front end of the mounting base 2, and two opposite sides of the first side frame 61 are both recessed to form insertion slots 63. After being assembled, one clamping portion 11 is fit into one insertion slot 63, and the push member 31 abuts the first side frame 61 to have the clamping portions 11 in more tight contact engagement with a rear wall of the insertion slot 63.

Referring to FIGS. 2, 6, and 7, the clamping portions 11 and the clamp bodies 1 provided in the embodiment of the present invention define an included angle α therebetween, where 97°≤α≤105°.

In the instant embodiment, to make the clamping portions 11 and the first side frame 61 in more tight contact engagement with each other to reduce void space. One side of the clamping portions 11 that faces the clamp bodies 1 is an inclined surface, and the clamping portions 11 and the clamp bodies 1 define therebetween an included angle α. The first side frame 61 is correspondingly formed with an inclined surface matching the clamping portions 11 to ease assembling of the first side frame 61.

In summary, the photography kit may comprise two push members 31, and two clamp bodies 1 are rotatably connected to the mounting base 2. After being assembled, the cylindrical pegs 311 of the push members 31 extend out of the front end of the mounting base 2. The two clamp bodies 1 are parallel arranged on two opposite sides of the mounting base 2. An external connection portion 21 is arranged at a rear end of the mounting base 2 and is connectable with a second photography piece. During a process of mounting the first photography device 6 on the photography kit, pressing down pressing portions 13 at tail portions of the two clamp bodies 1 makes the tail ends of the two clamp bodies 1 compress a torsion spring arranged therebetween, expanding head portions of the two clamp bodies 1. Curved surfaces on two sides of the first side frame 61 are caused to slide along curved surfaces of the two clamping portions 11 to get into the expanded head portions of the clamp bodies 1, and meanwhile, two positioning apertures 62 of the first side frame 61 align with constraining portions of the two push members 31, respectively , so as to have cones of free ends of the cylindrical peg 311 gradually penetrate into the positioning apertures 62 to have portions of the push member 31 abut positioning slot at openings of the positioning apertures 62. A first spring connected to ends of the push members 31 that are distant from the positioning portions is compressed, and releasing the two pressing portions 13 causes the clamping portions 11 of the two clamp bodies 1 to respectively fit into insertion slots 63 on two sides of the first side frame 61 to thereby realize fixed connection between the first photography device 6 and the second photography device 7.

To release, the pressing portions 13 at the tail portions of the two clamp bodies 1 are pressed down again to have the free ends of the two pressing portion 13 approaching each other, making the tail portions of the two clamp bodies 1 compress the torsion spring arranged therebetween, and meanwhile, the head portions of the two clamp bodies 1 are being expanded to allow the two clamping portions 11 to respectively detach from the two insertion slots 63, allowing the first side frame 61 to be gradually removed from the front end of the mounting base 2 between the two expanded head portions of the clamp bodies 1, and also allowing the constraining portions of the two push members 31 to gradually detach from the positioning apertures 62 to thereby separate the first photography device 6 and the first external connection assembly from each other.

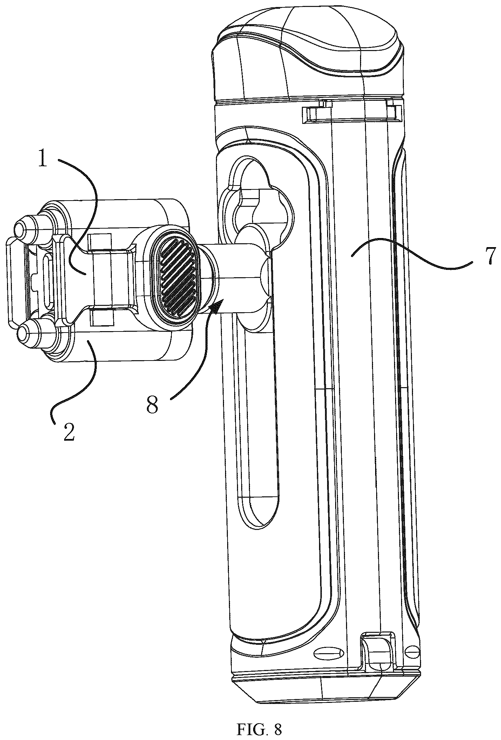

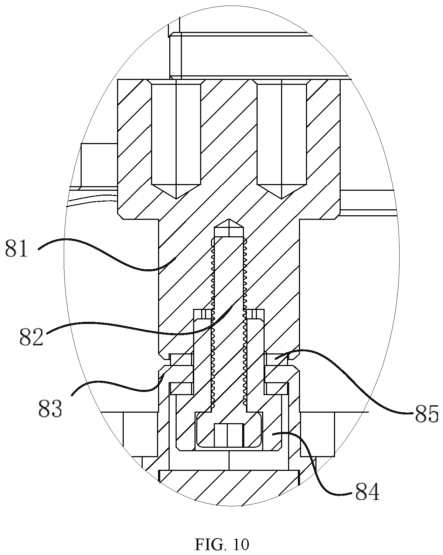

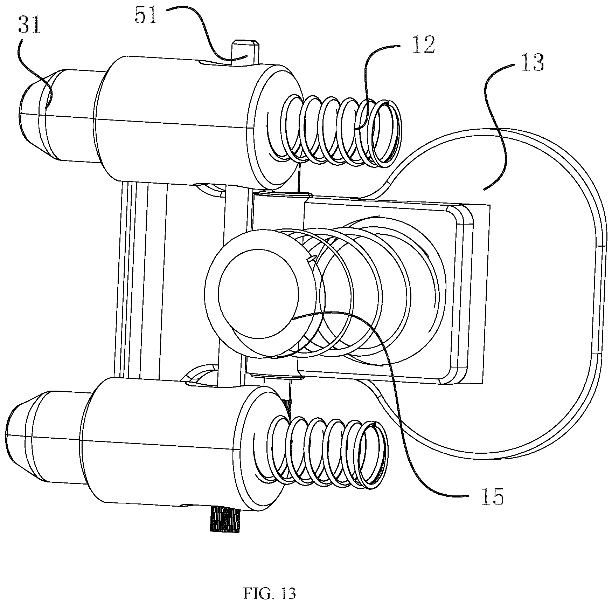

In a second embodiment, referring to FIGS. 8-13, a primary difference from the first embodiment is that the photography kit further comprises a rotary connection structure. The rotary connection structure comprises a rotation damping structure 8 and a first external connection assembly for clamping and fixing the first photography device 6. The first external connection assembly can be a clamp assembly. The rotation damping structure 8 comprises a mounting member 81, a fastening member 82, and a connecting member 83. One end of the fastening member 82 extends through the connecting member 83 to fix and connect to the mounting member 81. The connecting member 83 is rotatable, in a damped manner, about the fastening member 82. The connecting member 83 is connected to the first external connection assembly. The mounting member 81 is connected to the second photography device 7, and the second photography device 7 can be a handgrip, and the handgrip is fixed and connected to the mounting member 81, such as the handgrip including a mounting chute, and the mounting chute including two bolts to fasten the mounting member 81 on the handgrip, and adjusting the position of the mounting member 81 in the mounting chute adjusting the position of the rotary connection structure.

In the instant embodiment, the rotary connection structure realizes rotation between the first photography device 6 and the second photography device 7, which has a simple structure, can be operated easily, and is capable of making better video photographing and bringing better experience to users. When the handgrip is rotated, the mounting member 81 drives the fastening member 82 to rotate relative to the connecting member 83, making the first photography device 6 rotate relative to the second photography device 7.

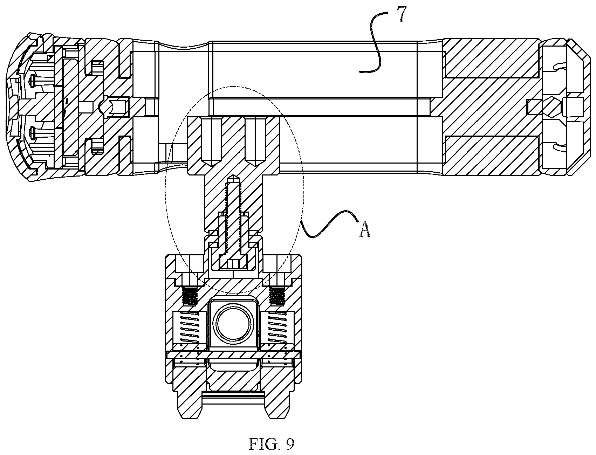

Further, referring to FIGS. 9-11, to smoothen the damped rotation, the rotation damping structure 8 further comprises a sleeve 84. The sleeve 84 can be a metal member, such as a copper member. The sleeve 84 comprises a positioning portion 841 and an extension portion 842 that are connected to each other. A diameter size of the positioning portion 841 is greater than a diameter size of the extension portion 842. The fastening member 82 extends through the extension portion 842. The connecting member 83 is formed with a receiving trough 831 that rotatably receives the positioning portion 841 therein. The receiving trough 831 may include a circular hole and the extension portion 842 extends through the circular hole and is fixedly connected to the mounting member 81. The fastening member 82 can be a bolt or a screw.

Further, the fastening member 82 comprises a screw rod and a screw top portion arranged at one end of the screw rod. The screw top portion is received in the positioning portion 841, and the screw rod extends through the extension portion 842 to threadedly connect with the mounting member 81 to have connection of the sleeve 84 and the mounting member 81 secured. The connecting member 83 is connected by means of a bolt to the mounting base 2.

Specifically, the rotation damping structure 8 further comprises two damping gaskets 85 both of which are mounted on the extension portion 842. One of the damping gaskets is located on the positioning portion 841 and a trough bottom of the receiving trough 831, and another one of the damping gaskets is located between the connecting member 83 and the mounting member 81.

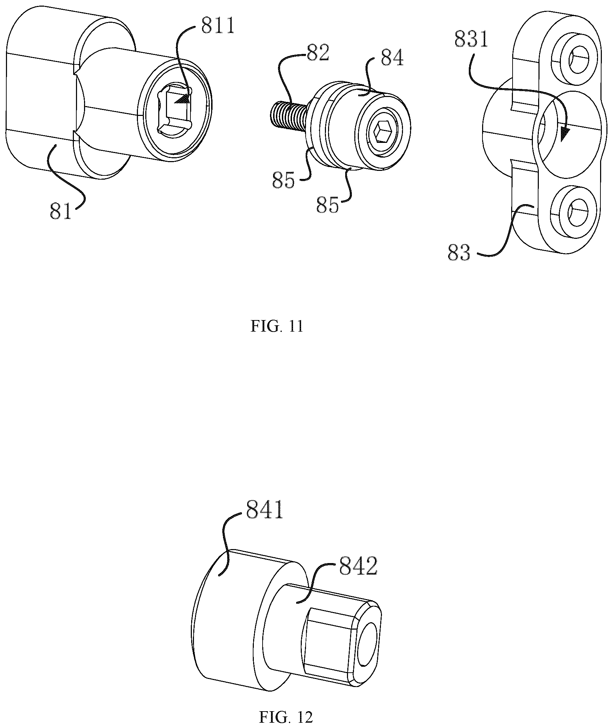

Further, referring to FIG. 12, a free end of the extension portion 842 is inserted into a retention notch 811 that is formed by recessing the mounting member 81. The extension portion 842 engages a notch sidewall of the retention notch 811 so that the extension portion 842 and the mounting member 81 are not rotatable. An external shape of the extension portion 842 is a non-circular shape.

In some embodiments, the mounting member 81 may further connect to a second external connection assembly, and the second external connection assembly connects the second photography device, the second external connection assembly and the mounting member 81 can be combined or can be separate. The second external connection assembly is provided with a quick release assembly, a slide chute port, a slide bar, an Arri structure, or a snap fitting structure for connection with the second photography device.

In summary, the handgrip is mounted by means of the rotary connection structure and the clamp assembly on the first side frame 61 of a mobile phone protection frame. To rotate an angle of the holding handgrip, a user holds the handgrip to rotate relative to the connecting member 83, the mounting member 81 drives the fastening member 82 and the sleeve 84 to rotate relative to the connecting member 83, and the positioning portion 841 rotates in the receiving trough 831.

The above describes some or preferred embodiments of the present invention, and the scope of protection of the present invention is not so constrained by either texts or drawings. All the equivalent structural variations that come from the one integral concept of the present invention as being made using the disclosure and the drawings of the present invention, or being directly and indirectly applied to other related fields of technology, are covered by the scope of protection of the present invention.

## Claims

1. A rotary connection structure, **characterized in that** the rotary connection structure comprises a first external connection assembly and a rotation damping structure, the first external connection assembly being adapted to externally connect with a first photography device, the rotation damping structure comprising a mounting member, a fastening member, and a connecting member, one end of the fastening member extending through the connecting member to fixedly connect to the mounting member, the connecting member being rotatable, in a damped manner, about the fastening member, the connecting member being connected to the first external connection assembly.

2. The rotary connection structure according to claim 1, **characterized in that** the rotation damping structure further comprises a sleeve, the sleeve comprising a positioning portion and an extension portion connected to each other, a diameter size of the positioning portion being greater than a diameter size of the extension portion, the fastening member extending through the extension portion, the connecting member being formed with a receiving trough that rotatably receives the positioning portion therein, the receiving trough comprising a circular hole, the extension portion extending through the circular hole and fixedly connected to the mounting member.

3. The rotary connection structure according to claim 2, **characterized in that** the fastening member comprises a screw rod and a screw top portion arranged at one end of the screw rod, the screw top portion being received in the positioning portion, the screw rod extending through the extension portion to threadedly connect with the mounting member.

4. The rotary connection structure according to claim 2, **characterized in that** the rotation damping structure further comprises two damping gaskets both of which are mounted on the extension portion, one of the damping gaskets being located on the positioning portion and a trough bottom of the receiving trough, another one of the damping gaskets being located between the connecting member and the mounting member.

5. The rotary connection structure according to claim 2, **characterized in that** a free end of the extension portion is inserted into a retention notch that is formed by recessing the mounting member, the extension portion engaging a notch sidewall of the retention notch so that the extension portion and the mounting member are not rotatable.

6. The rotary connection structure according to any one of claims 1 to 5, **characterized in that** the rotary connection structure further comprises a handgrip, the handgrip being fixedly connected to the mounting member; or
the mounting member is connected with a second external connection assembly, the second external connection assembly being externally connectable with a second photography device.

7. The rotary connection structure according to any one of claims 1 to 5, **characterized in that** the first external connection assembly clamps and fixes the first photography device, the first photography device comprising a first side frame, the first external connection assembly comprising two clamp bodies, a mounting base, and a first fastening assembly, the mounting base being fixedly connected to the connecting member, the two clamp bodies being rotatably arranged at two opposite sides of the mounting base, head portions of the two clamp bodies both extending beyond a front end of the mounting base to clamp and fix edges of the two sides of the first side frame, a second spring being arranged between the two clamp bodies, the second spring driving the two clamp bodies to clamp and fix the first side frame;
wherein the first fastening assembly is mounted on the mounting base in an extendible/retractable manner, a constraining portion of the first fastening assembly being extendible out of the front end of the mounting base, the constraining portion being insertable into a positioning aperture correspondingly formed in the first side frame.

8. The rotary connection structure according to claim 7, **characterized in that** the first fastening assembly comprises at least one push member, one end of the push member being provided with the constraining portion, the constraining portion comprising a cylindrical peg, the cylindrical peg having a cross-sectional area that is smaller than a cross-sectional area of a connecting portion between the push member and the cylindrical peg, a width dimension of a free end portion of the cylindrical peg being arranged to gradually contract.

9. The rotary connection structure according to claim 8, **characterized in that** the mounting base further comprises at least one elastic member, the elastic member being mounted in the mounting base, such that one elastic member drives one push member, in order to have the constraining portion extending beyond the front end of the mounting base.

10. The rotary connection structure according to claim 8, **characterized in that** the first fastening assembly further comprises a positioning pole, the positioning pole being fixedly mounted on the mounting base, the positioning pole extending in an up-down direction of the mounting base, the push member being formed with a sliding hole extending in a front-rear direction of the mounting base, the positioning pole penetrating through the sliding hole.

11. The rotary connection structure according to claim 7, **characterized in that** two external surfaces of the clamp bodies adjacent to tail ends are protruded to form connecting portions respectively extending in directions away from the clamp bodies, pressing portions being respectively connected to ends of the connecting portions that are away from the clamp bodies, the pressing portions being extended in a direction toward a rear end of the mounting base, so that a pressing space is defined between the pressing portions and the mounting base.

12. The rotary connection structure according to claim 7, **characterized in that** the head portions of the clamp bodies are protruded from inner side surfaces thereof facing the mounting base to form clamping portions, the clamping portions being arranged for retaining engagement with the first side frame, the clamping portions and the clamp bodies defining therebetween an included angle α, 97°≤α≤105°, left and right sides of the first side frame being each recessed to form an insertion slot, the two clamping portions being respectively insertable into the two insertion slots.

13. A photography kit, **characterized in that** the photography kit comprises a first photography device and a rotary connection structure according to any one of claims 1 to 12.
